Europäisches Patentamt

European Patent Office

Office européen des brevets

(11) Publication number : **0 481 696 A1**

# (12) EUROPEAN PATENT APPLICATION

(21) Application number : **91309409.0**

(22) Date of filing : **14.10.91**

(51) Int. Cl.$^5$: **C04B 35/66,** C04B 38/06, F27D 1/16

(30) Priority : **16.10.90 GB 9022374**

(43) Date of publication of application :
**22.04.92 Bulletin 92/17**

(84) Designated Contracting States :
**AT BE CH DE DK ES FR GB GR IT LI LU NL SE**

(71) Applicant : **FOSECO INTERNATIONAL LIMITED**
**285 Long Acre**
**Nechells Birmingham B7 5JR (GB)**

(72) Inventor : **Holmes, Alan Stewart**
**29 Birchwood Road**
**Lichfield, Staffordshire, WS14 7UN (GB)**
Inventor : **MacFarlane, William**
**20 Roberts Court, 813/817 Chester Road**
**Erdington, Birmingham, B24 0BX (GB)**

(74) Representative : **Moore, John Hamilton**
**Foseco Holding International Limited Group**
**Patents Department 285 Long Acre Nechells**
**Birmingham B7 5JR (GB)**

(54) Composition for producing fired refractory articles.

(57)   A composition for mixing with water for the production of fired refractory articles comprises particulate refractory material, a binder and fibres of a copolymer of vinyl acetate and vinyl chloride. The presence of the particular fibre used prevents or significantly reduces the tendency of the articles to spall when rapidly fired. The composition is particularly useful for producing refractory linings for metallurgical vessels.

EP 0 481 696 A1

This invention relates to a composition for producing fired refractory articles.

When water-containing masses are used to form refractory articles by methods which involve rapid heating of the formed articles, the water present is converted to steam within the mass and the steam becomes entrapped and on escaping, causes the surfaces of the article to spall and the article itself to crack or disintegrate altogether.

It is known from British Patent No. 1483101 to overcome the above problems by incorporating in the mass absorbent, channel-forming elements such as wheat straw or cut pieces of plastics drinking straw. When articles formed from water-containing masses containing the absorbent channel forming elements are heated the elements provide channels through which the water can escape. In the case of wheat straw, the water can enter the channels by absorption through the wall of the straw or through the opening at one of the two ends. In the case of plastics drinking straw the water enters through the opening at one of the ends.

It is also known from United States Patent No. 4419454 and from European Patent Application No. 116583 to add polypropylene fibres to water-containing refractory forming masses in order to prevent spalling or cracking of articles formed from the masses on firing.

It has now been found that fibres of a copolymer of vinyl acetate and vinyl chloride are particularly useful as additions to water-containing masses used to produce refractory articles by methods involving rapid firing.

According to the invention, there is provided a composition for mixing with water for the production of a refractory article the composition comprising particulate refractory material, a binder and fibres of a copolymer of vinyl acetate and vinyl chloride.

According to a further feature of the invention, there is provided a method for the production of a refractory article comprising mixing together a particulate refractory material, a binder, and fibres of a copolymer of vinyl acetate and vinyl chloride, forming the resulting mixture to the desired shape of the article and firing the article.

According to a further feature of the invention there is provided a refractory article formed from a composition comprising a particulate refractory material, a binder and fibres of a copolymer of vinyl acetate and vinyl chloride.

The particulate refractory material may be, for example, silica, alumina, mullite, bauxite, andalusite, kyanite, calcined aluminosilicate, chamotte, magnesia, zircon, zirconia mullite, silicon carbide or silicon nitride.

The binder may be for example, calcium aluminate, high alumina cement, alkali metal silicate or an inorganic phosphate.

A dispersing agent such as sodium phosphate may also be included.

The vinyl acetate/vinyl chloride copolymer fibres preferably have a length of 1 mm to 15 mm, preferably 3 mm to 12 mm, and a denier of 1 to 8, preferably 2 to 6. The quantity of fibres used will usually be in the range 0.01% to 1.0% by weight based on the particulate refractory material and will preferably be 0.02% to 0.2% by weight.

The composition and method may be used to produce rapid-fired refractory articles using various techniques such as casting, ramming or stamping and on rapid-firing the articles do not spall or have a significantly reduced tendency to spall compared with rapid fired articles which do not contain any fibre.

The composition of the invention is particularly useful for producing refractory linings in metallurgical vessels such as ladles or tundishes because the time required to dry/fire the linings can be considerably reduced compared to the time required to dry/fire a lining which does not contain the fibres.

The following examples will serve to illustrate the invention.

EXAMPLE 1

Compositions were prepared as shown in Tables 1 - 4 below. All the amounts indicated are parts by weight.

| COMPONENT | 1 | 2 | 3 | 4 |
|---|---|---|---|---|
| Chamotte (less than 9 mm) | 58.5 | 58.5 | 58.5 | 58.5 |
| Bauxite (less than 250 microns) | 28.0 | 28.0 | 28.0 | 28.0 |
| High Alumina Cement | 7.5 | 7.5 | 7.5 | 7.5 |
| Silica (less than 20 microns | 6.0 | 6.0 | 6.0 | 6.0 |
| Sodium Polyphosphate | 0.15 | 0.15 | 0.15 | 0.15 |
| PVA/PVC Fibre (6mm length/ 3 denier) | – | 0.05 | 0.10 | 0.15 |
| Water | 5.5 | 6.0 | 6.5 | 7.0 |

<u>TABLE 1</u>

| COMPONENT | 5 | 6 | 7 |
|---|---|---|---|
| Chamotte (less than 9 mm) | 58.5 | 58.5 | 58.5 |
| Bauxite (less than 250 microns) | 28.0 | 28.0 | 28.0 |
| High Alumina Cement | 7.5 | 7.5 | 7.5 |
| Silica (less than 20 microns) | 6.0 | 6.0 | 6.0 |
| Sodium Polyphosphate | 0.15 | 0.15 | 0.15 |
| PVA/PVC Fibre (12 mm length/ 3 denier) | 0.05 | 0.10 | 0.15 |
| Water | 6.0 | 6.5 | 7.0 |

TABLE 2

| COMPONENT | 8 | 9 | 10 |
|---|---|---|---|
| Chamotte (less than 9 mm) | 58.5 | 58.5 | 58.5 |
| Bauxite (less than 250 microns) | 28.0 | 28.0 | 28.0 |
| High Alumina Cement | 7.5 | 7.5 | 7.5 |
| Silica (less than 20 microns) | 6.0 | 6.0 | 6.0 |
| Sodium Polyphosphate | 0.15 | 0.15 | 0.15 |
| Polypropylene fibre (5 mm length/ 2 denier) | 0.05 | 0.10 | 0.15 |
| Water | 6.0 | 6.5 | 7.0 |

TABLE 3

| COMPONENT | 11 | 12 | 13 |
|---|---|---|---|
| Chamotte (less than 9 mm) | 58.5 | 58.5 | 58.5 |
| Bauxite (less than 250 microns | 28.0 | 28.0 | 28.0 |
| High Alumina Cement | 7.5 | 7.5 | 7.5 |
| Silica (less than 20 microns) | 6.0 | 6.0 | 6.0 |
| Sodium Polyphosphate | 0.15 | 0.15 | 0.15 |
| Polypropylene fibre (10 mm length/ 2 denier) | 0.05 | 0.10 | 0.15 |
| Water | 6.0 | 6.5 | 7.0 |

<u>TABLE 4</u>

The components, other than the fibre and the water, were mixed together for 4 minutes. For compositions 2 - 13, the fibre was then added and mixing was continued for 1 minute. Finally the water was added and mixing was continued for 5 minutes. As indicated in the Tables, additional water was necessary as the fibre content increased to obtain a mass of a similar consistency.

Each composition was then cast into moulds to produce 75 mm cubes. After 24 hours the cast cubes were demoulded and immediately placed in a muffle furnace at 950°C and rapidly fired. After 10 minutes the cubes were removed and examined. If a cube had not exploded, spalled or cracked within the 10 minutes period, it was considered to have passed the rapid fire test.

All the cubes made in composition 1, i.e. containing no fibre, exploded and the cubes containing 0.05 parts by weight of 5 mm, 2 denier polypropylene fibre also exploded. All the other cubes passed the test.

EXAMPLE 2

A tundish, for use in the continuous casting of steel, was lined with a permanent refractory lining based on calcined bauxite and alumina bonded with high alumina cement, and containing 0.10% by weight of vinyl acetate/vinyl chloride copolymer fibres of 6 mm length and 3.3 denier.

A former was placed inside the tundish, and 7500 kg of the refractory lining composition, which had been mixed with water, was cast into the space between the former and the tundish floor and walls using vibrating pokers.

After the cast lining had set the former was removed and the lining was allowed to air dry for 24 hours.

The lined tundish was then placed on a heating station and the lining was fired by burners programmed to the following heating cycle:-
(1) Heat from ambient temperature to 200°C at 40°C per hour.
(2) Hold at 200°C for 2 hours.
(3) Heat from 200°C to 700°C at 50°C per hour.
(4) Hold at 700°C for 2 hours.
(5) Heat from 700°C to 1000°C at 100°C per hour.
(6) Hold at 1000°C for 4 hours.
The burners were then switched off and the lining was allowed to cool to ambient temperature. The finished lining showed no evidence of spalling as a result of being subjected to the heating cycle used. When the same tundish is lined with a similar refractory lining composition which does not contain the vinyl acetate/vinyl chloride copolymer fibres, it is not possible to use the same heating cycle and a slower and longer cycle must be used.

## Claims

1. A composition comprising particulate refractory material, a binder and fibres for mixing with water for the production of a refractory article characterised in that the fibres are of a copolymer of vinyl acetate and vinyl chloride.

2. A composition according to Claim 1, characterised in that the fibres have a length of 1 mm to 15 mm.

3. A composition according to Claim 2, characterised in that the fibres have a length of 3 mm to 12 mm.

4. A composition according to any one of Claims 1 to 3, characterised in that the fibres have a denier of 1 to 8.

5. A composition according to Claim 4, characterised in that the fibres have a denier of 2 to 6.

6. A composition according to any one of Claims 1 to 5, characterised in that the fibres are present in an amount of 0.01% to 1.0% by weight based on the weight of particulate refractory material.

7. A composition according to Claim 6, characterised in that the fibres are present in an amount of 0.02% to 0.2% by weight based on the weight of particulate refractory material.

8. A method for the production of a refractory article in which a composition is formed to a desired shape and fired, characterised in that the composition is a composition according to any one of Claims 1 to 7.

9. A refractory article, characterised in that the article is formed from a composition according to any one of Claims 1 to 7.

**European Patent Office**    **EUROPEAN SEARCH REPORT**    Application Number

EP 91 30 9409

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-C-3 401 054 (DRESSER INDUSTRIES,INC.) * page 3, line 16 - page 3, line 17; claims; examples; table I * & US-A-4 430 439 * the whole document * | 1-9 | C04B35/66 C04B38/06 F27D1/16 |
| A | WO-A-8 400 747 (MORGAN REFRACTORIES LTD.) * the whole document * | 1-9 | |
| A | WORLD PATENTS INDEX Week 7638, Derwent Publications Ltd., London, GB; AN 76-71237X & JP-A-51 088 799 (TAKEDA CHEMICAL IND. KK) 4 August 1976 * abstract * | 1 | |
| A | WORLD PATENTS INDEX Week 7726, Derwent Publications Ltd., London, GB; AN 77-46224Y & JP-A-52 061 737 (MATSUSHITA ELEC. IND. KK) 21 May 1977 * abstract * | 1 | TECHNICAL FIELDS SEARCHED (Int. Cl.5) C04B |
| A | FR-A-2 518 082 (THE BABCOCK AND WILCOX CO.) | | |
| A | CHEMICAL ABSTRACTS, vol. 93, 1980, Columbus, Ohio, US; abstract no. 172536R, 'POROUS BRICKS' * abstract * & JP-C-8 010 555 (NIPPON KOHAN KK) 17 March 1980 | | |

The present search report has been drawn up for all claims

| Place of search | Date of completion of the search | Examiner |
|---|---|---|
| THE HAGUE | 16 JANUARY 1992 | HARBRON J.L. |